# DEMANDE DE BREVET EUROPEEN

(11) **EP 4 119 505 A1**
(43) Date de publication de la demande: **18.01.2023**
(21) Numéro de dépôt: 21305998.3
(22) Date de dépôt: 16.07.2021
(51) Int. Cl.: C02F 1/04, C02F 1/06, B01D 3/10, C02F 1/00, B01D 5/00, B01D 1/24, B01D 1/22, B01D 1/00, F28F 5/04, F28D 1/06, F28F 13/12, C02F 103/16, C02F 101/16

(54) **PROCÉDÉ DE TRAITEMENT D'UN FLUIDE COMPORTANT DES SELS ET INSTALLATION POUR METTRE EN OEUVRE LE PROCÉDÉ**

(71) Demandeur: HYDROMECANIQUE ET FROTTEMENT, 42160 Andrézieux-Bouthéon (FR)
(72) Inventeur: GARCIA, Frédéric, 69440 SAINT LAURENT D'AGNY (FR); VIAL, Georges, 42170 St Just-St Rambert (FR); DESBOUCHE-JANNY, Marie-Noëlle, 42480 La Fouillouse (FR)
(74) Mandataire: Santarelli

(57) **Abrégé**

L'invention concerne un procédé de traitement d'un fluide comportant : une étape (S31) d'introduction de fluide à traiter dans une enceinte (225) d'un sécheur (220) ; une étape (S32) de séchage du fluide dans l'enceinte (225) incluant une première phase (B) durant laquelle un poids de l'enceinte diminue et lorsque le poids de l'enceinte atteint un seuil bas ou qu'une vitesse de variation du poids de l'enceinte est inférieure à une première valeur prédéfinie, l'étape de séchage comporte une étape de remplissage complémentaire de l'enceinte jusqu'à ce que le poids de l'enceinte atteigne un seuil haut et une deuxième phase (C) durant laquelle le poids de l'enceinte diminue et lorsque la vitesse de variation du poids est inférieure à une deuxième valeur prédéfinie, le procédé comporte une étape (S33) d'extraction d'un résidu solide sous forme de poudre. L'invention concerne également une installation pour mettre en œuvre le procédé.

## Description

L'invention concerne un procédé de traitement de fluide, notamment d'un fluide contenant des sels, appelé « solution saline », en particulier à une concentration en sels faible ou moyenne, c'est-à-dire ayant par exemple une teneur en sels inférieure à 500 g/L, voire 300 g/L.

Elle vise en particulier à valoriser des déchets fluides, comme par exemple ceux générés par une ligne de traitement en bain de sels.

L'invention concerne également une installation permettant de mettre en œuvre un tel procédé.

A titre d'illustration dans le domaine de la nitruration, des pièces, par exemple en acier, sont généralement traitées par lots de plusieurs pièces, aussi dit par batch, sur une ligne de nitruration.

Pour cela, les pièces à traiter sont dégraissées, puis rincées et séchées en étuve.

Les pièces sèches sont ensuite immergées dans un bain de nitruration, dans une cuve (aussi appelée creuset), à haute température (par exemple de l'ordre de 500-650°C). Un tel bain de nitruration est généralement composé principalement de sels de nitruration fondus.

La nitruration a par exemple pour but de conférer aux pièces une dureté superficielle plus élevée et d'améliorer leurs propriétés mécaniques, par exemple par diffusion d'azote dans l'acier de pièces en acier.

Après la nitruration, les pièces sont optionnellement immergées dans un bain d'oxydation, dans une cuve (aussi appelée creuset), par exemple à 450°C environ. Un tel bain d'oxydation est généralement composé principalement de sels oxydants fondus. L'oxydation a par exemple pour but d'améliorer la résistance à la corrosion des pièces. Elle leur confère généralement un aspect noir uniforme.

Après la nitruration, ou l'oxydation le cas échéant, les pièces subissent une opération de trempe, par exemple dans une cuve d'eau à une température très inférieure à celle du bain, i.e. relativement froide.

Cependant, au fil des passages successifs, les différents bains se polluent.

L'eau des cuves de rinçage ou de trempe (aussi dite « eau de claquage ») est aussi enrichie en sels d'oxydation et/ou nitruration, par exemple en nitrates et nitrites.

Ces eaux de trempe, en tant que déchets liquides dangereux, nécessitent d'être traitées par des sociétés spécialisées dans le traitement de tels déchets. En général, le traitement consiste en une incinération.

De plus, il est nécessaire de stocker ces eaux de trempe avant de les envoyer pour un tel traitement.

En parallèle, les passages de lots successifs dans les bains de nitruration et/ou d'oxydation génèrent des boues, qui contiennent aussi des sels de nitruration et/ou d'oxydation.

Ces différents déchets requièrent donc d'être stockés avant d'être envoyés pour traitement.

Stockages et traitements génèrent non seulement des coûts importants, mais en plus ont un impact écologique néfaste.

Il est donc apparu un certain besoin de pouvoir traiter ces déchets, en particulier pour au moins en récupérer les sels qu'ils contiennent.

La granulométrie du sel de récupération ne doit pas être trop fine afin d'éviter le problème de volatilité de la poudre, ni trop grosse (par exemple supérieure à 1 cm) car un plus gros grain retient plus facilement de l'eau résiduelle. Il peut alors être dangereux d'utiliser un tel sel par exemple pour des traitements en bain de sel fondu, car l'évaporation instantanée de l'eau lors de la fusion du sel peut donner lieu à des projections de sel fondu.

Dans ce but de récupération des sels, des technologies de séchage ont été testées, ici sur des eaux de trempe nitrurantes et/ou oxydantes, à échelle « semi-industrielle », notamment, un procédé d'évapo-concentration, ou encore un procédé d'atomisation par pulvérisation.

Des essais ont été effectués avec un évapo-concentrateur sous vide avec racleur. Le procédé a permis d'obtenir un concentré à environ 30 % d'humidité, ce qui n'est pas utilisable en l'état pour une application à une ligne de nitruration/oxydation. Une étape de séchage supplémentaire est alors nécessaire pour obtenir une poudre avec une siccité d'au moins 95%, voire si possible d'au moins 98 %. Un test de centrifugation n'a pas permis d'obtenir la siccité requise. Cette approche en deux étapes n'a par conséquent pas été retenue.

L'atomisation consiste à sécher une solution introduite par une buse, par un flux d'air chaud dans une tour d'atomisation ; les gouttelettes sont instantanément séchées et la poudre est recueillie dans un cyclone.

Des essais avec un atomiseur à effet simple ont produit des poudres de taille caractéristique comprise entre 30 µm et 50 µm, soit beaucoup trop fines pour les objectifs d'utilisation visés.

D'autres essais avec un atomiseur « multi-effet » ont permis d'obtenir une poudre avec une granulométrie plus élevée, mais qui ne correspondait toutefois pas aux objectifs visés : en effet, la siccité cible pour certains sels n'a pas été atteinte et le profil granulométrique d'autres sels obtenus ne correspondait pas au profil exigé.

De plus, les équipements qui sont apparus nécessaires pour la mise en œuvre des procédés susmentionnés sont relativement encombrants et sophistiqués, et nécessitent en outre des équipements annexes (évapoconcentration et vibrofluidiseur), ce qui les rend relativement coûteux.

Une version « hybride » (flash atomiseur) a également été testée sur des équipements pilotes.

L'atomisation flash est basée sur le même principe qu'une tour d'atomisation mais se caractérise par une chambre de séchage toroïdale permettant d'accélérer le séchage des particules, avec un équipement plus compact.

Des essais effectués n'ont cependant pas été concluants car la poudre s'agglomère prématurément dans la chambre toroïdale.

Il existe aussi des procédés de cristallisation à granulométrie contrôlée, mis en œuvre dans un cristalliseur, mais ils se sont avérés difficiles à utiliser ou insuffisamment efficaces pour des solutions pluri-composants ou des sels très solubles.

Les procédés connus produisent donc des poudres trop fines, ou à un taux d'humidité trop élevé, ou sont trop coûteux, ou ne sont pas adaptés pour traiter des sels pluri-composants.

Il est donc apparu nécessaire de développer un autre procédé de traitement pour récupérer et recycler des sels résiduels dans une solution saline, notamment au moins pour des déchets fluides contenant des sels de nitruration et/ou oxydation.

La présente invention vise ainsi à surmonter, au moins en partie, les inconvénients précités, menant en outre à d'autres avantages.

A cet effet, est proposé, selon un premier aspect de l'invention, un procédé de traitement d'un fluide comportant des sels, notamment des sels de nitruration et/ou d'oxydation, le procédé comportant :
- Une étape d'introduction de fluide à traiter dans une enceinte d'un sécheur ;
- Une étape de séchage du fluide dans l'enceinte par mise à une température comprise entre 30°C et 90°C et à une pression comprise entre 10 mbars et 900 mbars, l'étape de séchage comportant une sous étape d'évaporation d'au moins une partie du fluide, produisant au moins une vapeur d'eau, et une sous étape d'augmentation de concentration en sels du fluide contenu dans l'enceinte, l'étape de séchage comportant :
   ∘ une première phase durant laquelle un poids de l'enceinte diminue et lorsque le poids de l'enceinte atteint un seuil bas ou qu'une vitesse de variation du poids de l'enceinte est inférieure à une première valeur prédéfinie, l'étape de séchage comporte une étape de remplissage complémentaire de l'enceinte jusqu'à ce que le poids de l'enceinte atteigne un seuil haut ; et
   ∘ une deuxième phase durant laquelle le poids de l'enceinte diminue et lorsque la vitesse de variation du poids est inférieure à une deuxième valeur prédéfinie, le procédé comporte
- Une étape d'extraction d'un résidu solide sous forme de poudre.

Un tel procédé permet ainsi de récupérer des sels de nitruration, et/ou d'oxydation, mais aussi des sels issus de traitement thermique, ou encore de désalinisation d'eau de mer. Le fluide à sécher peut par exemple provenir d'une solution saline aqueuse provenant d'une cuve d'une ligne de production de nitruration, par exemple une cuve de trempe. En outre, le fluide à traiter, la solution saline, peut être pluri-composants et inclure des sels très solubles.

Par exemple, le fluide à sécher a initialement une concentration en sels inférieure à 500 g/L, par exemple comprise entre 50 g/L et 500 g/L, voire par exemple entre 300 g/L et 400 g/L.

Un tel procédé permet ainsi de récupérer les sels contenus dans les fluides issus d'une ligne de nitruration, par exemple dans les eaux de trempe et/ou les boues, et réduire ainsi les déchets ; incidemment certains coûts de traitement sont ainsi maîtrisés.

Un tel procédé permet d'éliminer des quantités de déchets fluides puisque ceux-ci sont recyclés, au moins en partie, voire en intégralité dans la mesure du possible, pour extraire les sels contenus dans ces fluides suite aux passages successifs de pièces dans au moins une cuve dont ils proviennent.

Il permet en outre une limitation du gaspillage de ressources non renouvelables et une récupération de matières premières.

Par exemple sur des eaux de trempe oxydantes et/ou nitrurantes, un tel procédé permet notamment d'obtenir une granulométrie, une composition et une siccité des sels récupérés souhaitées, en un temps de séchage possiblement relativement court, et en une seule étape de séchage.

L'enceinte du sécheur est par exemple maintenue sous vide.

Le vide désigne par exemple ici une pression comprise entre environ 10 mbars et 900 mbars (millibars), par exemple entre 20 mbars et 500 mbars, voire entre 20 mbars et 100 mbars.

Un tel vide permet d'évaporer l'eau de la solution saline à des températures relativement faibles, par exemple entre 35°C et 90°C. Il peut aussi être utilisé pour aspirer du fluide à traiter.

Le remplissage complémentaire durant l'étape de séchage permet ainsi un remplissage semi-continu de l'enceinte, c'est-à-dire un remplissage tel que du fluide à traiter est ajouté dans l'enceinte du sécheur tandis que l'enceinte se vide du fait du traitement.

Ainsi, la première phase de l'étape de séchage comporte au moins un cycle dans lequel le fluide est concentré tandis que des vapeurs sont évaporées, jusqu'à ce que le poids de l'enceinte atteigne un seuil bas ou que sa vitesse de variation soit inférieure à une première valeur prédéfinie, puis un remplissage complémentaire est réalisé.

En effet, au cours du traitement, i.e. pendant l'étape de séchage et notamment pendant la phase de concentration, une partie du fluide, notamment l'eau du fluide, s'évapore, et par conséquent, le poids du contenu de l'enceinte diminue.

En parallèle, la concentration de sels dans le fluide contenu dans l'enceinte augmente. Par exemple, le sécheur comporte un système de pesons configuré pour contrôler un poids de fluide contenu dans l'enceinte.

Durant la première phase de l'étape de séchage, lorsque le poids de l'enceinte atteint par exemple un certain seuil, dit seuil bas, ou qu'une vitesse de variation du poids de l'enceinte est inférieure à une première valeur prédéfinie (i.e. la variation de poids s'amoindrit sur un intervalle de temps donné), alors la vanne est ouverte pour introduire du fluide à traiter. Tant que le poids est supérieur à ce seuil, ou varie plus que la première valeur prédéfinie, alors l'enceinte est considérée suffisamment remplie, et l'évaporation suit son cours.

Le seuil bas est choisi de telle sorte que l'ajout de fluide a une faible incidence sur la température du contenu de l'enceinte (par exemple, la température varie moins de 20%, voire 15%, voire moins de 10% ou même 5%, ou encore même moins de 3 % par rapport à la température moyenne du contenu de l'enceinte avant ajout) ; par exemple, le seuil bas est choisi pour représenter environ 85% du volume maximal de l'enceinte.

Les seuils sont par exemple déterminés pour chaque remplissage complémentaire de sorte à représenter un volume de remplissage sensiblement constant. En effet, au fur et à mesure de l'étape de séchage, le fluide se concentre en sel dans l'enceinte. Un même volume pèse donc de plus en plus lourd. De ce fait, la valeur de seuil peut varier d'un remplissage complémentaire à un autre.

Ainsi, par exemple, le procédé comporte une étape de contrôle d'un poids de l'enceinte, et lorsque le poids atteint le seuil bas ou que la vitesse de variation du poids de l'enceinte est inférieure à la première valeur prédéfinie, le procédé comporte une étape d'ouverture d'une vanne de remplissage et l'étape de remplissage complémentaire de fluide à traiter dans l'enceinte est mise en œuvre.

Et par exemple, lorsque le poids de l'enceinte atteint un seuil haut, le procédé comporte une étape de fermeture de la vanne de remplissage.

Par exemple, le système de pesons est aussi configuré pour détecter la fin du séchage, à l'issue de la deuxième phase. Par exemple, quand le poids de l'enceinte reste relativement constant dans le temps (c'est-à-dire que la variation du poids de l'enceinte dans le temps devient inférieure à une deuxième valeur prédéfinie), on considère alors que toute l'eau a été évaporée et que le produit est « sec » (a atteint un taux de siccité visé).

La première valeur prédéfinie et la deuxième valeur prédéfinie peuvent être égales ou différentes, par exemple la deuxième valeur prédéfinie peut être inférieure à la première valeur prédéfinie ; par exemple la deuxième valeur prédéfinie peut être proche de zéro. Par exemple, après un nombre de remplissages complémentaires prédéfini, ou que l'enceinte atteint un certain poids, alors la deuxième phase est mise en œuvre.

Par exemple, les remplissages complémentaires de la première phase sont réitérés jusqu'à obtention d'une concentration en sel dans le fluide contenu dans l'enceinte atteignant une valeur cible ; par exemple d'au moins 400 g/L, de préférence au moins 500 g/L pour des sels d'oxydation et/ou nitruration, mais la valeur cible dépend bien entendu de la nature des sels et/ou des applications considérées.

Dans un exemple de mise en œuvre, l'étape de séchage est configurée pour produire le résidu solide ayant un taux d'humidité compris entre 0.5 % et 5 %, en poids, voire entre 0.5 % et 3 %, voire entre 1 % à 2 %.

Le taux d'humidité est par exemple surveillé par une balance thermique, par exemple sur un échantillon de résidu solide prélevé.

Dans un exemple de mise en œuvre, l'étape de séchage est configurée pour produire le résidu solide ayant une granulométrie spécifique.

Par exemple, le résidu solide se présente sous forme de poudre de diamètre de grain compris entre 100 µm et 1000 µm, par exemple entre 200 µm et 500 µm, en moyenne.

La granulométrie ne doit pas être trop fine afin d'éviter le problème de volatilité de la poudre, ni trop grosse (par exemple supérieure à 1 cm) car un plus gros grain retient plus facilement de l'eau résiduelle.

Grâce à un tel procédé de séchage, au moyen d'un sécheur comme décrit ci-après dans le cadre de la présente invention, il est possible d'obtenir la granulométrie voulue.

Dans un exemple de mise en œuvre, l'étape de séchage comporte une étape d'émottage.

Une telle étape vise à limiter, voire éviter, une formation de motte dans l'enceinte.

Dans un exemple de mise en œuvre, le procédé comporte une étape de condensation de la vapeur issue du sécheur, produisant un condensat.

Le procédé permet alors en outre une réduction de la consommation d'eau par la réutilisation du condensat.

Par exemple, le procédé comporte alors une étape d'injection du condensat dans une cuve, par exemple une cuve d'eau de rinçage.

Par exemple, le condensat obtenu peut ainsi être utilisé comme eau de rinçage.

L'étape de condensation de la vapeur est par exemple mise en œuvre dans un condenseur.

Selon une option de mise en œuvre, le procédé comporte une étape d'absorption-neutralisation de gaz généré lors de l'étape de condensation de la vapeur par un absorbeur-neutralisateur, aussi dit scrubber.

Dans un mode de réalisation intéressant, le procédé comporte une étape d'extraction de fluide à traiter à partir d'une cuve d'une ligne de nitruration, voire par exemple à partir d'une cuve de stockage.

Par exemple, le procédé comporte une étape de filtration du fluide à traiter avant l'étape d'introduction dans l'enceinte du sécheur.

L'étape de filtration comporte par exemple une étape de passage du fluide dans un tamis à maille inférieure ou égale à 50 µm, par exemple comprise entre 2 µm et 50 µm.

L'étape de filtration comporte par exemple une étape d'élimination de particules par un barreau magnétique.

Par exemple, un tel barreau magnétique capte les particules magnétiques, en particulier par exemple des oxydes de fer.

L'invention concerne également une installation configurée pour mettre en œuvre un procédé comportant au moins une partie des étapes décrites précédemment.

Pour cela, l'installation comporte au moins un sécheur, lequel est configuré pour mettre en œuvre au moins l'étape de séchage.

Le sécheur comporte principalement une enceinte.

L'enceinte est par exemple de forme globalement cylindrique.

L'enceinte est par exemple une enceinte non-rotative.

Par exemple, l'enceinte comporte au moins une entrée de fluide à sécher, configurée pour introduire du fluide à sécher dans l'enceinte.

Par exemple, l'enceinte comporte au moins une sortie de déchargement de résidu solide. Par exemple, l'enceinte comporte au moins une sortie de vapeur.

Dans un exemple de réalisation intéressant, le sécheur comporte un mélangeur, en particulier un mélangeur hélicoïdal chauffé, par exemple par circulation d'un fluide caloporteur.

Par exemple, le mélangeur est configuré pour tourner dans l'enceinte, par exemple à une vitesse modérée, par exemple jusqu'à 100 tr/min, par exemple entre 1 tr/min et 100 tr/min (tours par minute), par exemple entre 1 et 25 tr/min, ce qui permet de brasser, de façon suffisamment homogène ici, le fluide à sécher et d'améliorer son contact avec une paroi de l'enceinte.

Le mélangeur passe par exemple à distance de la paroi de l'enceinte afin d'éviter de racler la paroi et ainsi limiter une usure du mélangeur.

Dans un exemple de réalisation intéressant, l'enceinte comporte un fond conique.

Un tel fond conique facilite le déchargement du résidu solide obtenu.

Par exemple, le résidu solide (par exemple sous forme de poudre) est déchargé de l'enceinte du sécheur par gravité.

Par exemple, le fond conique comporte la sortie de déchargement de résidu solide.

De plus, un sécheur traditionnel est habituellement prévu pour un fonctionnement par batch, pour sécher des produits pâteux à sec, avec un taux de remplissage de 60% à 100% d'un volume de l'enceinte.

Ici, compte tenu du fluide à traiter, un tel fonctionnement en mode batch limiterait fortement la productivité et le rendement du procédé. Par exemple, le résidu sec obtenu après séchage de 2000 L de fluide occuperait seulement environ 20% du volume de l'enceinte du sécheur tel que considéré ici.

Le sécheur considéré ici permet alors de travailler en mode « semi-continu ».

Pour cela, il comporte par exemple un système de pesons.

Un tel système de pesons est configuré pour peser l'enceinte, éventuellement en continu, et incidemment peser un contenu de l'enceinte.

Par exemple, le système de pesons comporte au moins un capteur de pesée.

Afin de mesurer correctement le poids de l'enceinte, celle-ci est de préférence découplée mécaniquement du reste de l'installation, par exemple en utilisant des conduits flexibles sur les entrées et sorties.

Une perte de poids du contenu de l'enceinte, notamment due à une évaporation d'eau du fluide traité, peut alors être compensée par ajout de fluide à traiter. Ceci permet en outre d'augmenter une concentration en sel du fluide contenu dans l'enceinte au fur et à mesure de l'opération de séchage.

Le volume du résidu sec ainsi obtenu au final est de l'ordre de 50% à 75% du volume de l'enceinte, voire supérieur à 80% et idéalement supérieur à 90%.

Cette opération de remplissage « semi-continu » peut être entièrement automatisée : le nombre d'ajouts et la quantité de fluide par ajout peuvent par exemple être paramétrables. Les ajouts de fluide se font en cours de séchage : le fluide est « aspiré », par exemple par différence de pression depuis une cuve, par exemple une cuve de stockage ou cuve tampon, reliée au sécheur, sans casser le vide de l'enceinte.

Pour cela, par exemple, le sécheur comporte au moins une vanne de remplissage.

Par exemple, la vanne de remplissage est configurée pour être ouverte quand un poids de l'enceinte atteint un seuil bas ou qu'une vitesse de variation du poids de l'enceinte est inférieure à une première valeur prédéfinie, et pour être fermée quand le poids de l'enceinte atteint un seuil haut ou quand le remplissage de l'enceinte atteint son niveau maximal.

Le poids, mesuré par le système de pesons, est par exemple corrélé au taux de remplissage de l'enceinte.

Par exemple, l'installation comporte un système de commande configuré pour contrôler une ouverture ou une fermeture de l'au moins une vanne de remplissage en fonction d'un poids de l'enceinte mesuré par le système de pesons.

Dans un exemple de réalisation intéressant, l'enceinte comporte une paroi formée d'une double enveloppe.

La double enveloppe est par exemple configurée pour y faire circuler un fluide caloporteur.

Le fluide caloporteur est par exemple configuré pour maintenir une température comprise entre 30°C et 90°C dans l'enceinte où le fluide est traité.

Par exemple, le sécheur est un sécheur-mélangeur vertical agité sous vide.

Dans un exemple de réalisation, l'enceinte du sécheur comporte un émotteur configuré pour limiter une formation de motte dans le fluide traité dans l'enceinte.

Cet émotteur est par exemple un émotteur à couteau, placé dans le bas de l'enceinte.

Un tel émotteur est par exemple configuré pour tourner jusqu'à une vitesse de 1500 tr/min.

Dans un exemple de réalisation, l'installation comporte un système d'extraction configuré pour acheminer le fluide à traiter d'un réservoir, par exemple une cuve d'une ligne de nitruration, au sécheur.

Par exemple, le système d'extraction comporte un système de filtration.

Le système de filtration comporte par exemple un tamis à maille inférieure ou égale à 50 µm, par exemple comprise entre 2 µm et 50 µm, voire par exemple entre 5 µm et 10 µm.

Par exemple, le système de filtration comporte en outre un barreau magnétique, lequel est par exemple configuré pour éliminer des particules magnétiques qui seraient contenues dans le fluide à traiter.

Par exemple, la sortie de vapeur du sécheur est munie d'un filtre.

Le filtre est par exemple configuré pour filtrer des vapeurs. Pour cela, le filtre comporte par exemple une cartouche filtrante, par exemple avec décolmatage à l'air comprimé. Le filtre retient par exemple les poudres ultrafines. Le décolmatage fait tomber ces poudres et redonne ainsi au filtre son efficacité.

Selon un exemple de réalisation, les poudres décolmatées retombent par gravité dans l'enceinte du sécheur.

Selon un exemple de mise en œuvre, l'installation comporte une chaudière configurée pour maintenir l'enceinte du sécheur à la température voulue.

La chaudière est par exemple configurée pour chauffer jusqu'à 130°C environ le fluide caloporteur circulant dans la double enveloppe de l'enceinte, ainsi que dans le mélangeur hélicoïdal.

La chaudière est configurée pour avoir un mode chauffage et un mode de refroidissement pour réduire la température du résidu solide produit.

Dans un exemple de réalisation, l'installation comporte un module de vide.

Par exemple, le module de vide est configuré pour produire un vide modéré dans l'enceinte du sécheur, c'est-à-dire une pression comprise entre 10 mbars et 900 mbars, par exemple entre 20 mbars et 500 mbars, voire entre 20 mbars et 100 mbars.

Une telle pression, assimilée à un vide, permet ainsi d'évaporer une eau du fluide à basse température, c'est-à-dire à une température comprise entre 30°C et 90°C.

Le module de vide est par exemple relié à la sortie de vapeur du sécheur.

Par exemple, le module de vide comporte au moins une pompe à vide.

Dans un exemple de réalisation, l'installation comporte en outre un condenseur.

Le condenseur est par exemple configuré pour condenser les vapeurs issues du sécheur par la sortie de vapeur et produire un condensat.

Le condenseur est par exemple raccordé à une sortie de vapeur du sécheur.

Le condenseur est par exemple un condenseur à faisceau tubulaire.

L'installation permet ainsi de récupérer de l'eau, laquelle peut être réutilisée.

Dans un exemple de réalisation, l'installation comporte un refroidisseur.

Par exemple, un échangeur de chaleur tubulaire est relié au refroidisseur.

Par exemple, l'installation comporte un réservoir de condensat configuré pour collecter les vapeurs condensées.

Dans un exemple de réalisation, l'installation comporte une canalisation d'alimentation en condensat configurée pour extraire le condensat du condenseur et possiblement le réinjecter dans une cuve, par exemple une cuve d'eau de rinçage.

Selon une option intéressante, la canalisation d'alimentation en condensat comporte un filtre.

Selon une option intéressante, l'installation comporte aussi ici un absorbeur-neutralisateur, couramment appelé scrubber.

Par exemple, le scrubber est relié au condenseur et permet de réduire voire d'éliminer une éventuelle présence de gaz toxiques ou corrosifs, éventuellement contenus dans le condensat (par exemple de l'ammoniac pour la nitruration).

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- la figure 1 représente schématiquement une ligne de nitruration traditionnelle ;
- la figure 2 illustre une installation de traitement selon un exemple de réalisation de l'invention, mise en place en parallèle d'une ligne de nitruration telle que représentée figure 1 ;
- la figure 3 montre, schématiquement, un sécheur selon un exemple de réalisation ;
- la figure 4 présente un diagramme illustrant un procédé de traitement selon un mode de mise en œuvre de l'invention ; et
- La figure 5 présente un graphe illustrant le traitement du fluide dans l'enceinte 225 du sécheur 220 par remplissage semi-continu.

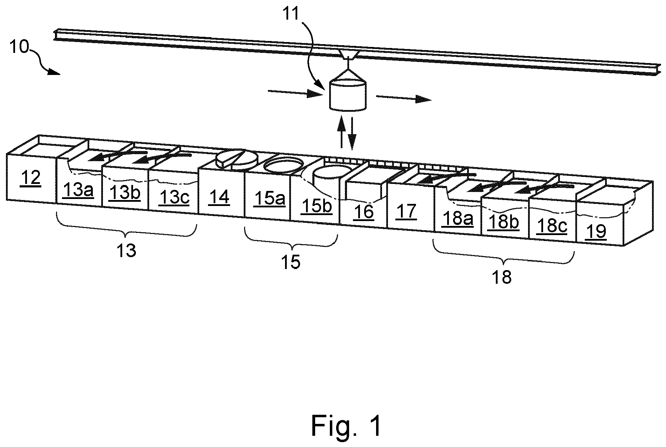

La figure 1 montre un exemple de ligne de nitruration 10.

Des pièces, par exemple en acier, sont agencées dans une cage 11 afin d'être traitées par lots de plusieurs pièces, aussi dit par batch.

Pour cela, la cage 11 est par exemple immergée dans une première cuve 12 contenant un bain de dégraissage.

Elles sont ensuite rincées, par exemple en immergeant la cage 11 successivement dans un bain d'eau de rinçage 13, voire plusieurs bains d'eau de rinçage en cascade 13a, 13b, 13c.

Puis, elles sont séchées dans une étuve 14.

La cage 11 est ensuite immergée dans au moins un bain de nitruration 15, voire deux bains successifs 15a, 15b comme schématisé ici. Un tel bain de nitruration 15 est généralement composé principalement de sels de nitruration fondus, à une température de 500-650°C environ.

Après la nitruration, les pièces sont optionnellement immergées dans un bain d'oxydation 16. Un tel bain d'oxydation 16 est généralement composé principalement de sels oxydants fondus, à une température de 450°C environ.

Après la nitruration, ou l'oxydation le cas échéant, les pièces subissent une opération de trempe, par exemple dans une cuve d'eau de trempe 17, à une température très inférieure à celle du bain, i.e. relativement froide.

Puis, les pièces sont rincées dans une cuve de rinçage post-traitement 18, ou plusieurs cuves 18a, 18b, 18c en cascade.

Éventuellement, d'autres traitement peuvent être appliqués, comme par exemple une imprégnation. La cage peut alors être ensuite immergée dans un bain d'imprégnation 19 par exemple.

Cependant, au fil des passages successifs, les différents bains se polluent.

Par exemple, des boues se sécrètent dans les bains de nitruration 15 et/ou d'oxydation 16, lesquelles contiennent des sels de nitruration et/ou d'oxydation.

L'eau des cuves de rinçage post-traitement 18 ou de trempe 17 (aussi dite « eau de claquage ») est aussi enrichie en sels d'oxydation et/ou nitruration, par exemple en nitrates et nitrites.

Ces eaux de trempe 17, en tant que déchets liquides dangereux, nécessitent d'être traitées par des sociétés spécialisées dans le traitement de tels déchets.

Ces différents déchets requièrent donc d'être stockés avant d'être envoyés pour traitement.

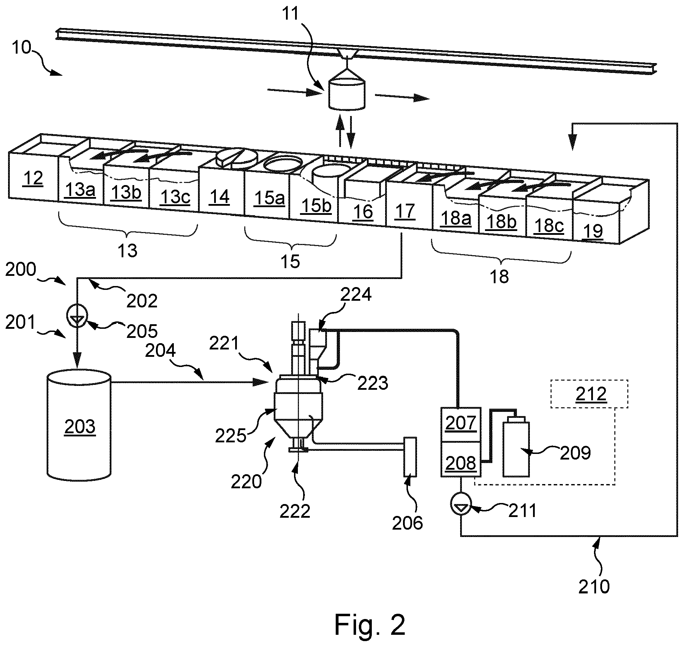

La figure 2 montre un exemple d'installation 200 permettant de traiter au moins en partie ces déchets et en recycler les sels qu'ils contiennent.

Sur cet exemple, un fluide contenant des sels est extrait de la cuve de trempe 17, mais il pourrait bien entendu s'agir de toute autre cuve contenant un fluide correspondant à une solution saline.

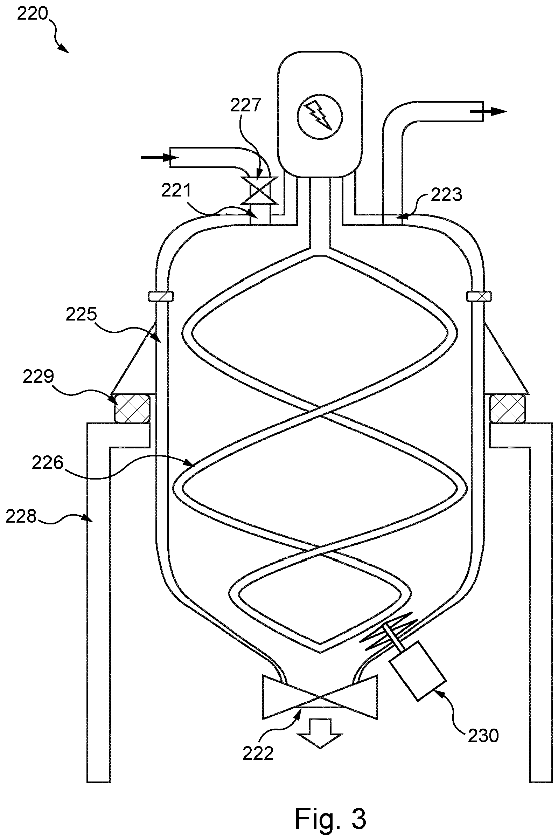

Pour cela, l'installation 200 comporte principalement un sécheur 220, représenté plus en détail schématiquement figure 3.

Pour acheminer le fluide à traiter d'une cuve (ici la cuve de trempe 17) au sécheur 220, l'installation comporte ici d'abord un système d'extraction 201.

Ici, le système d'extraction 201 comporte par exemple une cuve tampon 203, et au moins une canalisation amont 202, menant de la cuve d'où est extrait le fluide à traiter à la cuve tampon 203.

La canalisation amont 202 comporte ici par exemple un système de filtration 205.

Le système de filtration 205 comporte par exemple un tamis à maille inférieure ou égale à 50 µm, par exemple comprise entre 2 µm et 50 µm, voire par exemple entre 5 µm et 10 µm.

Ici, le système de filtration 205 comporte en outre un barreau magnétique, lequel est par exemple configuré pour éliminer des particules magnétiques qui seraient contenues dans le fluide à traiter.

En aval de la cuve tampon 203, le système d'extraction 201 comporte par exemple au moins une canalisation aval 204, menant de la cuve tampon 203 au sécheur 220, en particulier à une entrée de fluide à sécher 221 du sécheur 220.

Le sécheur 220 comporte ici au moins deux sorties 222, 223 : une sortie de déchargement de résidu solide 222 et une sortie de vapeur 223.

La sortie de vapeur 223 est munie de deux voies parallèles qui sont raccordées à un module de vide 207.

Une première des deux voies issues de la sortie de vapeur 223 est par exemple munie d'un filtre 224.

Le filtre 224 est par exemple configuré pour filtrer des vapeurs. Pour cela, le filtre 224 comporte par exemple une cartouche filtrante, par exemple avec décolmatage à l'air comprimé.

Par exemple, tant que le contenu du sécheur est assez liquide, les vapeurs sont condensées directement sans passer par le filtre 224, c'est-à-dire en passant par une deuxième des deux voies issues de la sortie de vapeur 223 et menant au modèle de vide 207.

Mais quand le contenu est relativement sec, par exemple au cours d'une phase C du procédé telle que décrite ci-après, il peut alors y avoir des poussières entrainées par les vapeurs et il est alors préférable de passer par le filtre 224, c'est-à-dire par la première des deux voies issues de la sortie de vapeur 223.

Le filtre 224 est donc par exemple activé durant la phase C du procédé.

L'installation comporte par exemple aussi une chaudière 206 configurée pour maintenir une enceinte du sécheur à la température voulue.

La chaudière 206 est par exemple configurée pour chauffer jusqu'à 130°C environ un fluide caloporteur configuré pour maintenir un intérieur de l'enceinte à une température voulue.

La chaudière 206 peut être commutée en mode chauffage ou refroidissement pour réduire la température du résidu solide produit dans l'enceinte pendant une phase de décharge, via la sortie de déchargement de résidu solide 222.

En aval du sécheur, l'installation comporte ensuite le module de vide 207 auquel est reliée la sortie de vapeur 223.

Le module de vide comporte par exemple au moins une pompe à vide configurée pour produire un vide modéré dans une enceinte du sécheur 220, c'est-à-dire une pression comprise entre 10 mbars et 900 mbars.

Le module de vide comporte par exemple deux pompes qui peuvent être utilisées en série ou individuellement (selon l'application et l'efficacité requise) : par exemple une pompe Roots, et une pompe à anneau liquide.

L'installation peut en outre comporter un condenseur 208 configuré pour condenser les vapeurs issues du sécheur 220 par la sortie de vapeur 223. Le condenseur est par exemple un condenseur à faisceau tubulaire. Le condenseur 208 comporte par exemple un échangeur de chaleur tubulaire.

Pour cela, l'installation peut en outre comporter un refroidisseur 209.

Par exemple, l'échangeur de chaleur tubulaire du condenseur 208 est relié au refroidisseur 209.

Les vapeurs condensées peuvent être collectées dans un réservoir de condensat.

Ici, en aval du condenseur 208, l'installation comporte une canalisation d'alimentation en condensat 210 configurée pour extraire le condensat du condenseur et possiblement le réinjecter dans une cuve d'eau de rinçage, par exemple ici la cuve de rinçage 18c.

Il est à noter qu'ici, le condensat comporte par exemple de l'eau liquide, produit par la condensation des vapeurs d'eau issues du sécheur.

Dans le présent exemple de réalisation, la canalisation d'alimentation en condensat 210 comporte optionnellement un filtre 211.

Selon une option intéressante, l'installation comporte aussi ici un absorbeur-neutralisateur 212, couramment appelé scrubber 212. Ici, le scrubber 212 est relié au condenseur 208 et permet de réduire voire d'éliminer une éventuelle présence de gaz toxiques ou corrosifs.

De tels gaz, par exemple de l'ammoniac, sont éventuellement contenus dans le condensat.

Le sécheur 220 est illustré plus en détails sur la figure 3.

Le sécheur 220 est configuré pour sécher des fluides contenant des sels, qu'ils soient liquides ou boues, sous vide. Ces fluides sont également désignés solutions salines.

Le sécheur 220 est un sécheur sous vide, en particulier à mélangeur vertical chauffé, tournant à une vitesse modérée pour obtenir un flux ascendant de produit périmétrique et un renouvellement du produit en contact avec les parois chauffées de l'enceinte.

Pour cela, le sécheur comporte principalement une enceinte 225, laquelle est munie de l'entrée de fluide à sécher 221, de la sortie de déchargement de résidu solide 222 et de la sortie de vapeur 223.

L'enceinte 225 est ici fixe, au sens où elle n'est pas rotative, et est maintenue par un support 228.

L'enceinte 225 comporte ici un fond conique ce qui facilite le déchargement du résidu solide obtenu.

La sortie de déchargement de résidu solide 222 est donc de préférence formée à une extrémité du fond conique, en bas de l'enceinte.

La sortie de déchargement de résidu solide 222 comporte par exemple une valve sphérique avec contact métal-métal.

Selon une caractéristique privilégiée, l'enceinte 225 comporte une double enveloppe, c'est-à-dire une paroi extérieure et une paroi intérieure délimitant entre elles un espace permettant une circulation d'un fluide caloporteur.

Le fluide caloporteur est par exemple chauffé par un chauffage électrique tel que la chaudière 206 pour le chauffer jusqu'à 130°C par exemple.

Par exemple, le fluide caloporteur comporte une huile.

Dans le présent exemple de réalisation, la paroi intérieure forme ainsi une cuve interne, qui est par exemple en Hastelloy C22, ou tout matériau équivalent.

Dans l'enceinte 225, le sécheur comporte ici un mélangeur 226 configuré pour mélanger et sécher le contenu de l'enceinte, i.e. le fluide à traiter.

Le mélangeur comporte par exemple une lame hélicoïdale chauffée par la circulation d'un fluide caloporteur.

Le mélangeur 226 est par exemple configuré pour tourner à une vitesse variable en fonction des besoins, par exemple jusqu'à 100 tr/min.

Le mélangeur 226 passe ici à distance de la paroi intérieure de l'enceinte 225 afin d'éviter de racler la paroi et ainsi limiter une usure du mélangeur 226.

Selon une option intéressante présente ici, le sécheur comporte un émotteur (hacheur) 230 dans l'enceinte 225 ; un tel émotteur 230 est par exemple configuré pour tourner à une vitesse jusqu'à 1500 tr/min pour casser des éventuelles mottes.

Pour réaliser un remplissage semi-continu, le sécheur comporte une vanne de remplissage 227.

Dans le présent exemple de réalisation, la vanne de remplissage 227 est raccordée sur l'entrée de fluide à sécher 221 du sécheur.

La vanne de remplissage 227 est ouverte ou fermée en fonction d'un poids de l'enceinte. Lorsqu'elle est ouverte, elle permet alors une introduction de fluide à traiter dans l'enceinte, via l'entrée de fluide à sécher 221, par aspiration du fluide grâce au module de vide 207.

Pour connaitre le poids de l'enceinte, le sécheur comporte un système de pesons 229.

Ceci permet de connaître l'état de remplissage de l'enceinte et en fonction, introduire du fluide à traiter.

Dans le présent exemple de réalisation, le système de pesons 229 comporte au moins deux, de préférence trois, capteurs de pesée régulièrement espacés autour de l'enceinte. Leurs valeurs de mesures sont ensuite par exemple moyennées (ou additionnées) pour déterminer un poids de l'enceinte, et donc connaitre son état de remplissage.

Un capteur de pesée est ici schématiquement disposé entre un épaulement de l'enceinte et une partie de support 228.

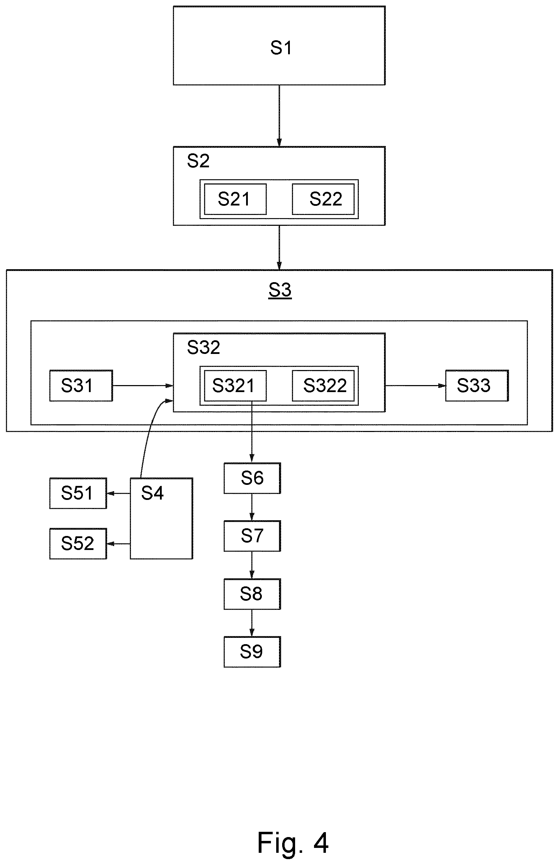

La figure 4 illustre les principales étapes d'un procédé de traitement d'un fluide comportant des sels selon un exemple de mise en œuvre de l'invention, par exemple dans le cadre d'une installation telle qu'illustrée sur la figure 2.

Le procédé comporte par exemple une séquence d'étape comme suit.

Le procédé comporte d'abord une étape S1 d'extraction de fluide à traiter à partir d'une cuve, ici une cuve de trempe 17 d'une ligne de nitruration.

Le fluide à traiter, alors l'eau de trempe contenant des sels provenant des bains précédents de nitruration et oxydation, est acheminée par le système d'extraction 201.

Le procédé comporte par exemple une étape S2 de filtration du fluide à traiter, par exemple par le système de filtration 205. L'étape S2 de filtration comporte ici à la fois une étape S21 de passage du fluide dans le tamis du système de filtration 205 et une étape S22 d'élimination de particules magnétiques, telles que des oxydes de fer, par le barreau magnétique.

Le procédé comporte ensuite une étape S3 de traitement du fluide, à savoir :
- Une étape S31 d'introduction de fluide à traiter dans l'enceinte 225 du sécheur 220, via l'entrée de fluide à sécher 221 ;
- Une étape S32 de séchage du fluide dans l'enceinte 225 par mise à une température comprise entre 30°C et 90°C et à une pression comprise entre 10 mbars et 900 mbars ; et
- Une étape S33 d'extraction d'un résidu solide sous forme de poudre, laquelle est par exemple récupérée par la sortie de déchargement de résidu solide 222.

L'étape S32 de séchage comporte deux sous-étapes, qui ont lieu concomitamment :
∘ une sous étape S321 d'évaporation d'au moins une partie du fluide, produisant au moins une vapeur d'eau qui est extraite de l'enceinte 225 par la sortie de vapeur 223, et
∘ une sous étape S322 d'augmentation de concentration en sels du fluide contenu dans l'enceinte 225

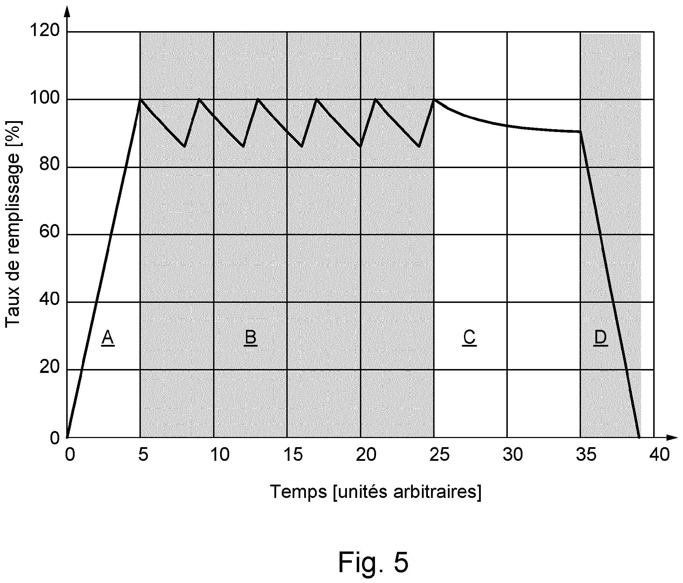

Comme décrit plus en détails en lien avec la figure 5, l'étape de séchage comporte ici deux phases :
∘ une première phase (indiquée « B » sur la figure 5) durant laquelle un poids de l'enceinte diminue et lorsque le poids de l'enceinte atteint un seuil bas ou qu'une vitesse de variation du poids de l'enceinte est inférieure à une première valeur prédéfinie, l'étape de séchage comporte une étape de remplissage complémentaire de l'enceinte jusqu'à ce que le poids de l'enceinte atteigne un seuil haut ; et
∘ une deuxième phase (indiquée « C » sur la figure 5) durant laquelle le poids de l'enceinte diminue et lorsque la vitesse de variation du poids est inférieure à une deuxième valeur prédéfinie, l'étape S33 d'extraction du résidu solide est mise en œuvre.

Pour réaliser le remplissage en semi-continu, le procédé comporte ici une étape S4 de contrôle d'un poids de l'enceinte 225, par exemple par le système de pesons 229, et lorsque le poids atteint un seuil bas (correspondant à un seuil bas de remplissage) ou qu'une vitesse de variation du poids de l'enceinte est inférieure à une deuxième valeur prédéfinie, le procédé comporte une étape S51 d'ouverture de la vanne de remplissage 227 et l'étape remplissage complémentaire de fluide à traiter dans l'enceinte 225 est mise en œuvre.Lorsque le poids de l'enceinte atteint un seuil haut (correspondant à un seuil haut de remplissage), le procédé comporte une étape S52 de fermeture de la vanne de remplissage 227.

En parallèle, l'intérieur de l'enceinte est maintenu sous vide, ce qui permet une aspiration de fluide à traiter dans l'enceinte lorsque la vanne de remplissage 227 est ouverte.

Le procédé comporte aussi ici une étape S6 de condensation de la vapeur issue du sécheur 220 par la sortie de vapeur 223 au moyen du condenseur 208, produisant ainsi un condensat.

Selon une option représentée ici, le procédé comporte une étape S7 d'absorption-neutralisation de la vapeur, par l'absorbeur-neutralisateur 212.

Le condensat est par exemple ensuite acheminé par la canalisation d'alimentation en condensat 210.

Selon une autre option représentée ici, le procédé comporte une étape S8 de filtration du condensat par le filtre 211 de la canalisation d'alimentation en condensat 210.

Puis le procédé comporte une étape S9 d'injection du condensat dans la cuve de rinçage 18c.

La figure 5 présente un graphe illustrant le traitement du fluide dans l'enceinte 225 du sécheur 220 par remplissage semi-continu.

Ce graphe montre plus précisément une évolution du taux de remplissage de l'enceinte (en %), en ordonnées, en fonction du temps selon une unité ici arbitraire, en abscisses. Ce graphe met ici en évidence quatre phases dans le temps : une phase « A » correspondant à l'étape S31 d'introduction de fluide à traiter dans l'enceinte 225 du sécheur 220 initialement vide, une phase « B » correspondant à la première phase de l'étape S32 de séchage, durant laquelle le contenu de l'enceinte est surtout concentré en sels, une phase « C » correspondant à la deuxième phase de l'étape S32 de séchage, et enfin une phase « D » qui correspond à l'étape S33 d'extraction du résidu solide, par exemple par la sortie de déchargement de résidu solide 222.

Le remplissage est habituellement fait avec une pompe de relevage (non représentée). La fin du remplissage peut être détectée par pesée ou par volumétrie.

L'enceinte est mise sous vide après le remplissage de l'étape S31 d'introduction de fluide à traiter, par exemple par le module de vide 207.

Lors de la première phase « B », le poids de l'enceinte est surveillé, par exemple en continu ; l'atteinte d'un seuil bas, ou un ralentissement jusqu'à atteindre la première valeur prédéfinie, déclenche l'ouverture de la vanne de remplissage 227, le fluide est alors aspiré par le vide ; l'atteinte du seuil haut déclenche la refermeture de la vanne de remplissage 227. Au fur et à mesure des apports de fluide, la teneur en sel dans l'enceinte augmente. Les seuils haut et bas peuvent évoluer au fil des remplissages, en particulier pour maintenir un taux de remplissage volumique constant. En effet, la densité du sel peut différer de la densité de l'eau et le poids dépend de la teneur en sel.

Le nombre de remplissages et la variation des seuils peuvent être programmés à l'avance ou être pilotés entièrement par les mesures de poids, de débits ou de teneur en sel.

Quand la teneur souhaitée est atteinte, la première phase « B » est terminée. Commence alors la deuxième phase « C » pendant laquelle il n'y a plus d'apport en fluide.

Dans cette étape, le pompage peut être renforcé, par exemple en utilisant un compresseur rotatif (pompe Roots) en amont de la pompe à vide du module de vide, ce qui permet d'atteindre des taux de siccité plus élevés. Dans cette étape, le poids est également surveillé constamment. La perte de poids par unité de temps (équivalent au taux d'évaporation) permet alors d'estimer le taux d'humidité restante et de déterminer la fin du séchage.

C'est de préférence pendant la deuxième phase « C » que l'émotteur est mis en route, soit dès le début, soit quand un certain taux d'humidité est atteint.

Enfin, le sécheur est vidé.

A titre d'exemple, une opération de séchage a été réalisée sur des eaux de trempe d'oxydation issues d'une chaine de nitruration. La solution à traiter présentait une concentration moyenne de 255 g/L. Un poids initial de 2324 kg (correspondant à un volume de 1857 L) a été introduit dans l'enceinte du sécheur. L'enceinte a été mise sous vide (i.e. sous environ 50 mbars) au moyen d'une pompe à anneau liquide. La solution a été portée à une température de 38°C.

Puis les cycles d'évaporation/concentration ont démarré. Au total, 3397 kg d'eau de trempe ont été ajoutés en dix étapes (soit en moyenne 377 kg à chaque ajout) pendant 2421 minutes (correspondant à la durée de la phase B) jusqu'à l'obtention d'une concentration massique de 52 %.

La phase de séchage finale (phase C) a été ensuite enclenchée jusqu'à l'observation de la transition de phase liquide-solide au bout de 21 heures de séchage pour un résidu sec analysé à 91.67 % (taux de siccité). Le basculement en mode filtration des vapeurs a été opéré, l'émotteur a été enclenché et un vide de 10 mbars a été atteint après l'enclenchement de la pompe Roots.

Après 6 heures de séchage à 85°C, 1217 kg d'une poudre présentant un extrait sec à 99.09% ont été extraits du sécheur, puis réutilisés sur la chaine de nitruration sans impact qualité. L'opération de séchage a parallèlement généré 4335 kg de condensats qui ont été réutilisés dans les rinçages de la chaine de nitruration.

## Revendications

1. Procédé de traitement d'un fluide, notamment comportant des sels, le procédé comportant :
- Une étape (S31) d'introduction de fluide à traiter dans une enceinte (225) d'un sécheur (220) ;
- Une étape (S32) de séchage du fluide dans l'enceinte (225) par mise à une température comprise entre 30°C et 90°C et à une pression comprise entre 10 mbars et 900 mbars, l'étape de séchage comportant une sous étape (S321) d'évaporation d'au moins une partie du fluide, produisant au moins une vapeur d'eau, et une sous étape (S322) d'augmentation de concentration en sels du fluide contenu dans l'enceinte (225), l'étape de séchage comportant :
∘ une première phase (B) durant laquelle un poids de l'enceinte diminue et lorsque le poids de l'enceinte atteint un seuil bas ou qu'une vitesse de variation du poids de l'enceinte est inférieure à une première valeur prédéfinie, l'étape de séchage comporte une étape de remplissage complémentaire de l'enceinte jusqu'à ce que le poids de l'enceinte atteigne un seuil haut ; et
∘ une deuxième phase (C) durant laquelle le poids de l'enceinte diminue et lorsque la vitesse de variation du poids est inférieure à une deuxième valeur prédéfinie, le procédé comporte
- Une étape (S33) d'extraction d'un résidu solide sous forme de poudre.

2. Procédé selon la revendication 1, comportant une étape (S4) de contrôle d'un poids de l'enceinte (225), et lorsque le poids atteint le seuil bas ou que la vitesse de variation du poids de l'enceinte est inférieure à la première valeur prédéfinie, le procédé comporte une étape (S51) d'ouverture d'une vanne de remplissage (227) et l'étape de remplissage complémentaire est mise en œuvre, et lorsque le poids de l'enceinte atteint un seuil haut, le procédé comporte une étape (S52) de fermeture de la vanne de remplissage (227).

3. Procédé selon l'une quelconque des revendications 1 ou 2, dans lequel l'étape de séchage est configurée pour produire le résidu solide ayant un taux d'humidité compris entre 0.5 % et 5 %, en poids.

4. Procédé selon l'une quelconque des revendications 1 à 3, dans lequel l'étape (S32) de séchage est configurée pour produire le résidu solide sous forme de poudre de diamètre de grain compris entre 100 µm et 1000 µm en moyenne.

5. Procédé selon l'une quelconque des revendications 1 à 4, comportant une étape (S6) de condensation de la vapeur issue du sécheur (220), produisant un condensat.

6. Procédé selon la revendication 5, comportant une étape (S9) d'injection du condensat dans une cuve d'eau de rinçage (18).

7. Installation (200) configurée pour mettre en œuvre un procédé selon l'une quelconque des revendications précédentes, l'installation (200) comportant au moins un sécheur (220) qui comporte au moins une enceinte (225), notamment une enceinte non rotative, et au moins une entrée de fluide à sécher (221), une sortie de déchargement de résidu solide (222), et une sortie de vapeur (223).

8. Installation (200) selon la revendication 7, **caractérisée en ce que** le sécheur (220) comporte un mélangeur (226), en particulier un mélangeur hélicoïdal chauffé, configuré pour tourner dans l'enceinte (225) à une vitesse comprise entre 1 tr/min et 100 tr/min.

9. Installation (200) selon l'une quelconque des revendications 7 ou 8, **caractérisée en ce que** le sécheur (220) comporte un système de pesons (229) configuré pour peser l'enceinte (225).

10. Installation (200) selon l'une quelconque des revendications 7 à 9, **caractérisée en ce que** le sécheur (220) comporte au moins une vanne de remplissage (227) ; la vanne de remplissage (227) étant configurée pour être ouverte quand un poids de l'enceinte atteint un seuil bas ou qu'une vitesse de variation du poids de l'enceinte est inférieure à une première valeur prédéfinie, et fermée quand le poids de l'enceinte atteint un seuil haut.

11. Installation (200) selon les revendications 9 et 10, **caractérisée en ce qu'**elle comporte un système de commande configuré pour contrôler une ouverture ou une fermeture de l'au moins une vanne de remplissage (227) en fonction d'un poids de l'enceinte (225) mesuré par le système de pesons.

12. Installation (200) selon l'une quelconque des revendications 7 à 11, **caractérisée en ce que** l'enceinte (225) comporte une paroi formée d'une double enveloppe, et **en ce que** la double enveloppe est configurée pour y faire circuler un fluide caloporteur.

13. Installation (200) selon la revendication 12, **caractérisée en ce que** le fluide caloporteur est configuré pour maintenir une température comprise entre 30°C et 90°C dans l'enceinte (225) où le fluide est traité.

14. Installation (200) selon l'une quelconque des revendications 7 à 13, **caractérisée en ce qu'**elle comporte un module de vide (207) configuré pour produire une pression dans l'enceinte (225) du sécheur (220) comprise entre 10 mbars et 900 mbars.

15. Installation (200) selon l'une quelconque des revendications 7 à 14, **caractérisée en ce qu'**elle comporte un condenseur (208), raccordé à la sortie de vapeur (223) du sécheur (220), le condenseur (208) étant configuré pour condenser les vapeurs issues du sécheur (220) par la sortie de vapeur (223) et produire un condensat, et **en ce que** l'installation (200) comporte une canalisation d'alimentation en condensat (210) configurée pour extraire le condensat du condenseur (208) et le réinjecter dans une cuve (18).
